# EUROPEAN PATENT APPLICATION

(11) **EP 1 160 896 A2**
(43) Date of publication of application: **05.12.2001**
(21) Application number: 01113010.1
(22) Date of filing: 28.05.2001
(51) Int. Cl.: H01M 4/04, H01G 9/058

(54) **Electrode structure, battery and electrical double-layer capacitor and method of manufacturing same**

(30) Priority: 01.06.2000 JP 2000164947
(71) Applicant: Nisshinbo Industries, Inc., Chuo-ku, Tokyo 103-8650 (JP); ITOCHU CORPORATION, Chuo-ku, Osaka-shi, Osaka 541-8577 (JP)
(72) Inventor: Sato, Takaya, c/o Nisshinbo Industries, Inc., Midori-ku, Chiba-shi, Chiba 267-0056 (JP); Shimizu, Tatsuo, c/o CI Techno-Sales Inc., Tokyo 107-8077 (JP)
(74) Representative: Sajda, Wolf E., Dipl.-Phys.

(57) **Abstract**

It is an object of the invention to provide an electrode structure composed of a low resistance electrode film with good bonding properties on a current-collecting member surface. Hence, the invention relates to an electrode structure (1) obtainable by coating a compound mixture (31) comprising an electrode material (11), a binder (17) and a solvent (19) onto a current-collecting member (13), and by directing a warm breeze (51) onto the compound mixture (31) coating to vaporize the solvent (19) and to form an electrode film (18) on the current-collecting member (13). Also, a manufacturing method for a battery and a double-layer capacitor using such an electrode structure (1) are disclosed.

## Description

### Field of the invention

The present invention relates to a novel method of manufacturing an electrode structure, and to a manufacturing method for producing a battery and an electrical double-layer capacitor utilizing the electrode structure.

### Description of prior art

A typical electrode structure of the prior art is manufactured by coating a current-collecting member surface with a compound mixture containing an electrode material, a powdered electrically-conducting substance, binder and solvent, vaporizing the solvent by directing hot air flow, and drying the coating to attach an electrode film to the surface of the current-collecting member. Unfortunately, the electrode film is prone to peel away from the current-collecting member and as a consequence the electrical resistance of the electrode film does not decrease. Here, hot air flow is generated by a hot air heater utilizing outside air of 80-200 °C at 15-25 m/second.

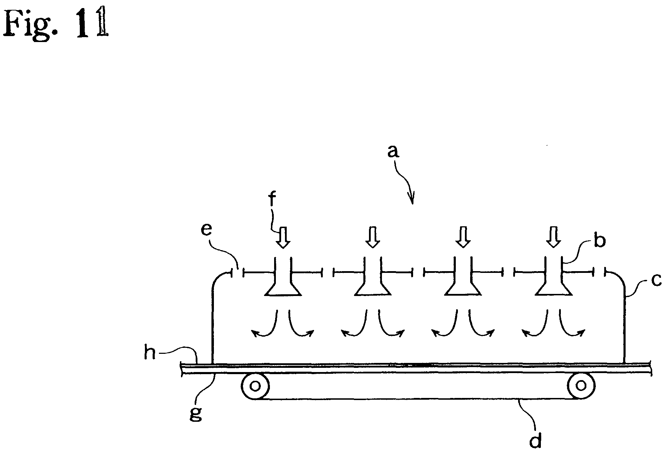

For example as shown in Figure 11, the hot air heater is configured such that electrode structures containing an electrode film **h** coated on a current-collecting member **g** is moved by the conveyor d into the cabinet **c** and hot air flow **f** is directed onto the electrode film **h** from a hot air outlet to vaporize the solvent involved. The hot air flow moves the solvent outwards by way of the cabinet outlet e.

### SUMMARY AND OBJECT OF THE INVENTION

An object of this invention is to provide an electrode film that adheres well to the current-collecting member.

Another object of this invention is to provide an electrode film with low electrical resistance.

Another object of this invention is to provide a battery or double-layer capacitor with an electrode film having low electrical resistance and good bonding.

This invention relates to a method of manufacturing an electrode structure by coating a compound mixture comprising an electrode material, binder, and solvent onto a current-collecting member, directing warm breeze onto the compound mixture coating to vaporize the solvent and form an electrode film on the current-collecting member.

### BRIEF DESCRIPTION OF DRAWINGS

The above and other objects and advantages of the present invention will become readily apparent by reference to the following detailed description when considered in conjunction with the accompanying drawings.
- FIGS.1A to 1F: are plan views showing different types of electrode structures;
- FIG. 2: is a schematic view of the fabrication of an electrode structure;
- FIG. 3: is a plan view of a breezy/air drying device used in this invention;
- FIGS.4A and 4B: are views illustrating the drying of the coated compound mixture by hot air flow and by breezy/air, respectively;
- FIGS.5A and 5B: are plan views showing different battery structures;
- FIGS.6A and 6B: are plan views showing different structures of electric double-layer capacitors;
- FIGS. 7A to 7C: are plan views showing different levels of peeling strength.
- FIG. 8: is a schematic view illustrating the covering of ion-conducting polymer;
- FIGS. 9A to 9D: are, plan, perspective and cross-sectional views of the respective press-sliding and kneading device;
- FIG. 10: is a plan view of a fixing or adhesion device; and
- Fig. 11: is a schematic view of a prior art hot air heating device.

### DETAILED DESCRIPTION OF EMBODIMENT

The embodiments of the invention are next described while referring to the accompanying drawings.

The electrode structure of this invention can be used in the electrodes of electronic components wherein typically an electrolyte is provided between the electrodes. When the electrical component is a battery, the electrode structure exchanges electricity by way of electrolyte ions. When the electrical component is a double-layer capacitor, the electrode structure forms an electrical double-layer between a material with a large surface area and electrolyte.

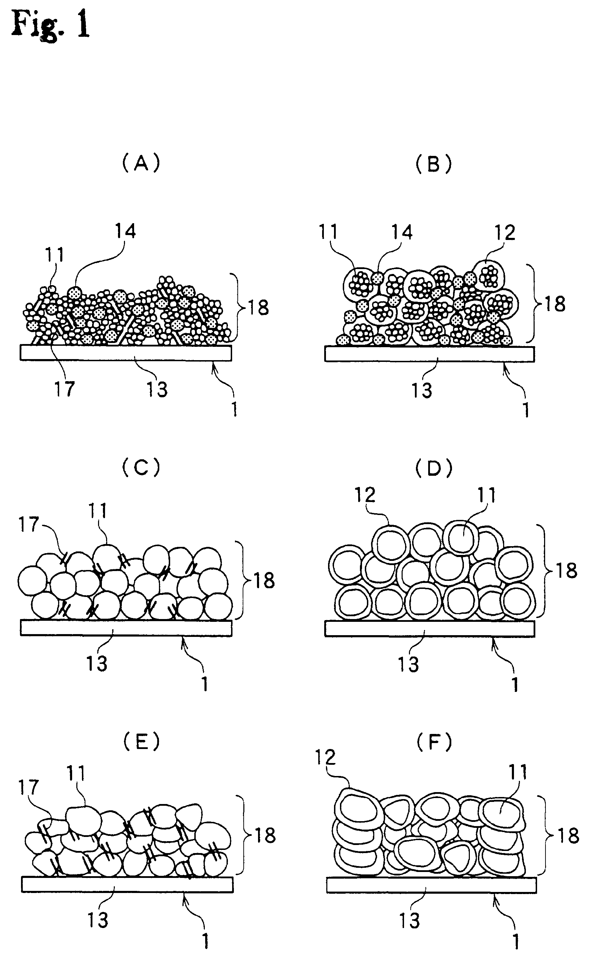

Figure 1 illustrates examples of typical electrode structures. The electrode structure of FIG. 1(A) is used as the positive electrode of a battery. In this figure, the electrode structure 1 is an electrode film 18 consisting of an electrode active material as an electrode material 11, an electrically-conductive material 14, and binder 17, attached to the surface of the current-collecting member 13. Here, LiCoO₂, i.e., the powdered electrode active substance, for example, is used as the electrode active material.

In FIG. 1(B), an ion-conducting polymer 12 is attached to the powered electrode material 11 of FIG. 1(A). The ion-conducting polymer 12 also acts as a binder. FIG. 1(C) shows an electrode structure used in the negative electrode of a battery. In this figure, the electrode structure 1 is an electrode film 18 consisting of a powdered electrode active substance as an electrode material 11 and a binder 17, attached to the surface of the current-collecting member 13. Here, graphite powder is, for example, used as the powdered electrode active substance.

FIG. 1(D) is the electrode material of FIG. 1(C) coated with the ion-conducting polymer 12. This ion-conducting polymer also functions as a binder. In FIG. 1(E), the electrode structure is used as an electrode for the double-layer capacitor. In this figure, the electrode structure 1 is an electrode film 18 consisting of a large surface area material as an electrode material 11 and a binder 17, attached to the surface of the current-collecting member 13.

Here, active carbon material, i.e., powdery high surface area material, is used, for example, as the large surface area material.

In FIG. 1(F), an ion-conducting polymer 12 is attached to the powdery high surface area material of FIG. 1(E). This ion-conducting polymer also functions as a binder. When the electrode material 11 is covered with the ion-conducting polymer 12, this ion-conducting polymer functions as a binder. The electrode material covered with the ion-conducting polymer is described in detail later on.

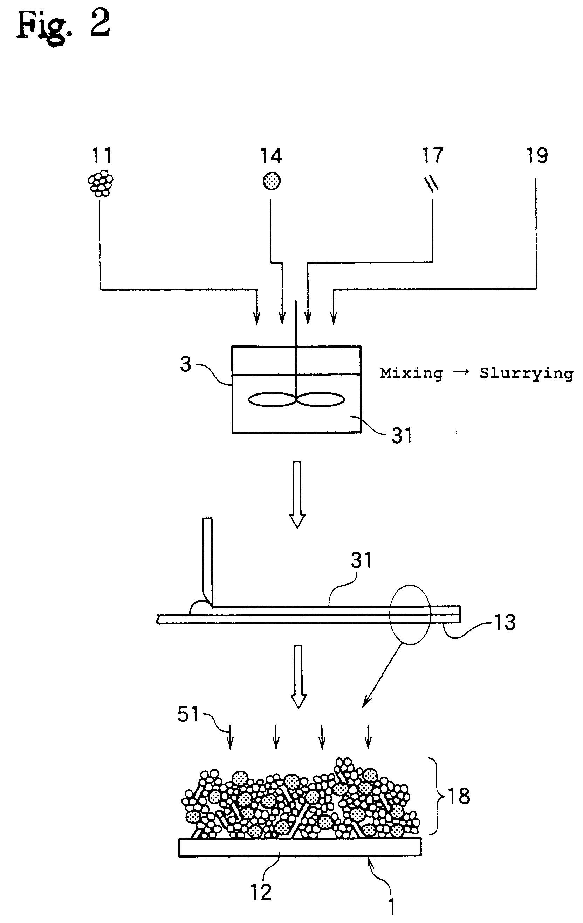

An example of the manufacturing method of this invention to produce an electrode structure is shown in FIG. 2. The electrode material 11, electrically-conductive material 14, binder 17, and solvent 19 are mixed together by slurrying in a mixer 3 to obtain the mixed material 31. The mixed material 31 is lightly coated onto the surface of the current-collecting member 13.

The method for coating the mixed material 31 may proceeded by a doctor knife applicator. The solvent of the mixed material coating is vaporized by breezy/air heating, and the material coating dried and attached to the current-collecting member 13 as the electrode film 18. As such, this invention provides the same advantages as an electrode film obtained through the method of drying the mixed material coating by infrared radiation as disclosed in Japanese Patent Application No. 2000-32279 by the present inventors.

Breezy/Air heating is a heating method for drying the mixed material 31 and is conducted by directing breezy/air with heat, i.e., warm breeze 51, to the mixed material 31. A breezy/air heater 51 is a device used to heat an object by blowing air, wherein the breezy/air with heat, i.e., the warm breeze 51, is directed onto the mixed material to dry the mixed material into electrode film 18.

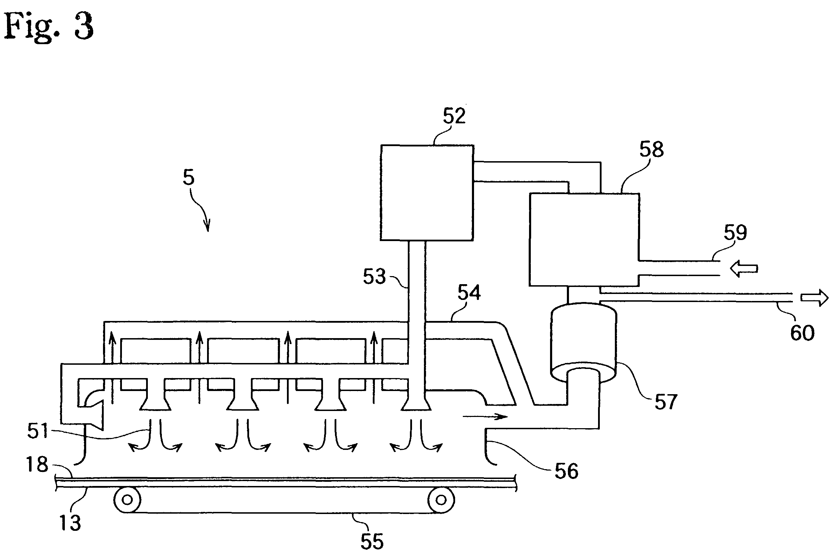

For example as in FIG. 3, the breezy/air is injected from an outside air inlet 59, dried by a dry air generator 58, and heated by an air heater 52, and the warm breeze 51 is injected into the cabinet 56 via a guide tube 53. The electrode film 18 coated on the current-collecting member 13 is moved within the cabinet 56 by a conveying means such as a conveyer 55. The warm breeze 51 is directed onto the electrode film 18, vaporizes the solvent involved in the electrode film 18, and is subsequently directed into the solvent collector 57 via ducts 54, thereby collecting the vaporized solvent.

The warm breeze 51 after removing the solvent is exhausted from partial ducts 60, and the rest of the air is returned into the dry air generator 58. The warm breeze 51 in this invention preferably is a gas flow such as an air flow of 60-150 °C at 0.1-3m/second or lower.

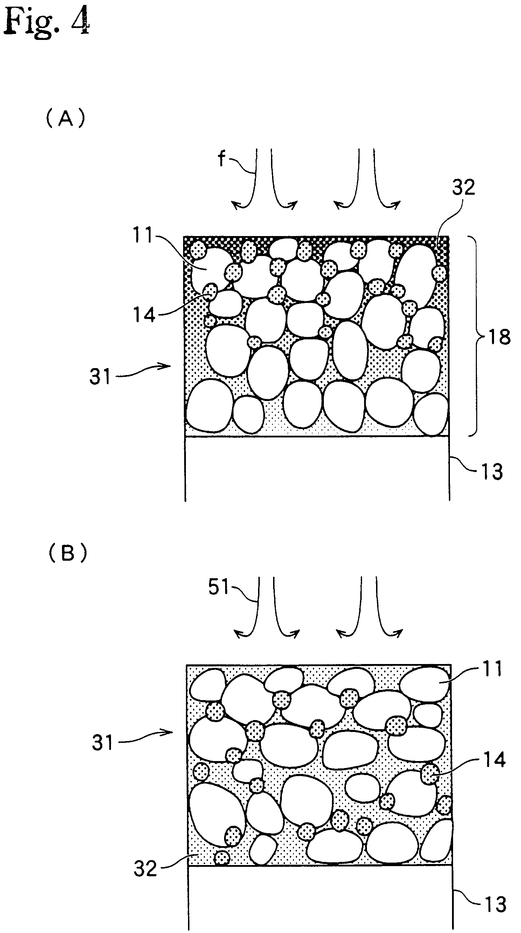

When warm breeze 51 is used, the electrode film 18 from the dried mixed material adheres (or bonds) well to the current-collecting member 13, and the electrical resistance of the electrode film 18 is also low. The reason for the above result may be shown in a hypothetical process as depicted in FIG. 4. FIG. 4 shows an enhanced view of the internal state of the mixed material 31 when the solvent 19 of the mixed material coated on the current-collecting member 13 is vaporized. FIG. 4(A) shows the conventional method of applying hot air flow f of 80-200 °C at 15-25 m/second onto the mixed material 31 to vaporize the solvent 32 mixed with a binder. FIG. 4(B) shows the method of this invention wherein the warm breeze 51 of 60-150 °C at 1-3m/second, is directed onto the mixed material 31 to vaporize the solvent 32 mixed with a binder.

The solvent vaporization process works as follows in the case of the conventional method of directing the hot air flow **f** of FIG. 4(A). First, when hot air flow **f** is applied to the surface of the mixed material, the area around the surface of the mixed material 31 suddenly warms up in the hot air flow **f,** and the solvent on the surface is vaporized and blown away by the hot air flow **f.**

The solvent near the surface therefore quickly vaporizes, and to compensate, the solvent at the interior of the mixed material and near the collector electrode moves to the vicinity of the surface The binder contained in the solvent and the powdered conducting material are at this time carried to the surface of the mixed material 31 along with the solvent. That is, migration of the binder and the powdered conducting material occurs.

As a result, the binder concentration of the mixed material in the vicinity of the current-collecting member 13 and the powdered conducting material concentration become thin. The electrode film therefore tends to easily peel away from the current-collecting member 13; the relative electrical resistance in the vicinity of the current-collecting member becomes high; and the resistance of the electrode overall becomes high.

In contrast, in the method of this invention shown in FIG. 4(B) in which the warm breeze 51 is directed, the solvent vaporization process works as follows. When the warm breeze 51 is directed onto the mixed material surface, the warm breeze 51 gradually heats up the entire mixed material and gradually vaporizes the solvent from the mixed material surface. The concentrations of binder and powdered conducting material 14 therefore remain uniform overall. That is, migration of the binder and the powdered conducting material is prevented.

As a result, the binder concentration in the vicinity of the current-collecting member 13 does not become weak (or thin) in the electrode material of dried mixed material 31. Accordingly, the electrode film adheres well to the current-collecting member 13. Further, the concentration of the powdered conducting material in the vicinity of the current-collecting member 13 does not become weak either, so that the electrical resistance of the overall electrode film is low.

The current-collecting member 13 may be any material capable of conducting electricity, and the material and shape can be selected according to the electronic component containing member 13. As one example, the electrically-conductive material may be aluminum or copper and formed into a plate, leaf or mesh shape. When the current-collecting member is a plate or leaf shape, one or both sides are used according to the structure of the electronic component.

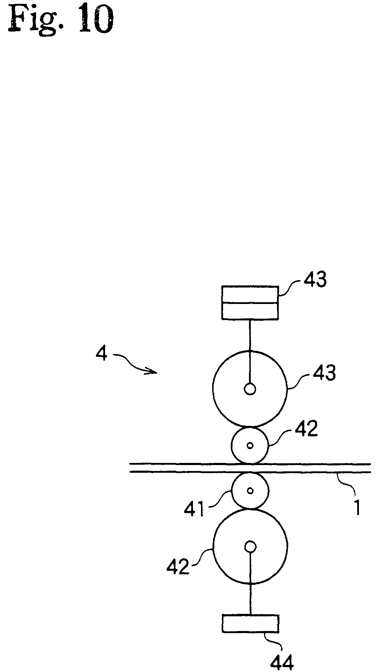

The electrode film 18 for adhering to the current-collecting member 13 may be pressed into the current-collecting member to make it further adhere. To further fix film 18, a fixing device 4 as shown in Fig. 10 is used. An electrode structure 1 made from current-collecting member coated with mixed material is enclosed by the pressure rollers 41. Electrode film can be bonded to the current-collecting member by applying a rotating pressure with the pressure device 43 and by means of the backroller 42 applied against pressure rollers 41. Further, the fixing or adhesion device 4 is not limited to a four-roller device and is sufficient as long as it presses and adheres the electrode film to the current-collecting member . For example, a two-roller press device may be appropriate.

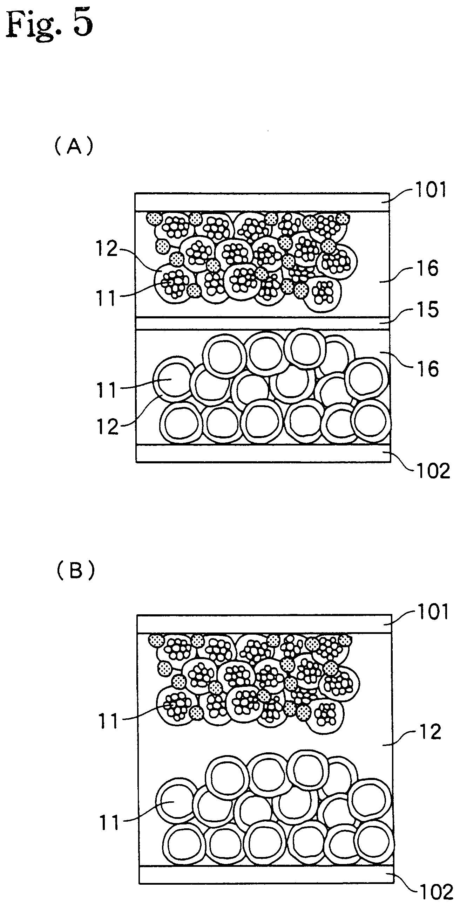

The electrode structure of FIG. 1(A) or FIG. 1(B) can be used as the positive electrode while an electrode structure useful as a negative electrode is shown in FIG. 1(C) or FIG. 1(D). An electrolyte may be positioned between the respective electrode structures. FIG. 5 shows an example in which a battery comprises an electrode structure of FIG. 1(B) as the positive electrode and an electrode structure of FIG. 1(D) as the negative electrode.

Here, FIG. 5(A) shows the case when the electrolyte is a liquid electrolyte 16, and a separator 15 is placed between the electrodes. FIG. 5(B) shows the case when the electrolyte is an ion-conducting polymer 12 in solid. The separator 15 is installed to isolate one pair of electrode structures 1, and the electrolyte can be used in solid when required according to circumstances.

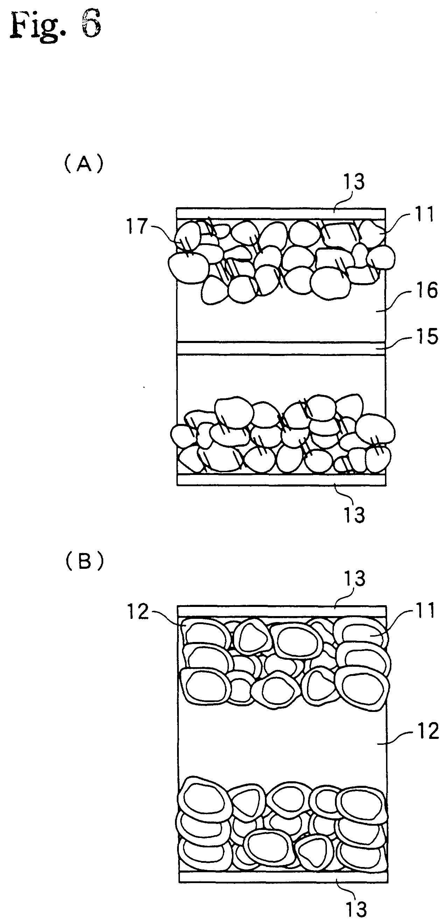

The double-layer capacitor has a structure with electrolyte placed between one pair of electrodes of the electrode structure of FIG. 1(E) or one pair of electrodes of the electrode structure of FIG. 1(F). A double-layer capacitor utilizing the electrode structure of FIG. 1(E) is shown in FIG. 6(A), and a double-layer capacitor utilizing the electrode structure of FIG. 1(F) is shown in FIG. 6(B).

Here, FIG. 6(A) shows the case when the electrolyte is a liquid electrolyte 16, and a separator 15 is placed between the electrodes. FIG. 6(B) shows the case when the electrolyte is an ion-conducting polymer 12 in solid. The separator 15 is installed to isolate one pair of electrode structures 1, and the electrolyte can be used in solid when required according to circumstances.

Examples of the electrode structure are described next.

Eight electrode structure sample pieces 1 - 8 were dried using two types of heating methods; one method was the hot air flow method of the prior art and the other was breezing/air heating method of this invention. The peeling strength and impedance (Ω/ohm) of these sample pieces were measured. A battery using the electrode structures was prepared and a cycle degradation was measured. The ratio (proportions) of electrode material, conductive material, binder, and solvent material used in the preparation of the sample pieces are shown in Table 1.

**TABLE 1**

| | ACTUAL ELECTRODE COMPOSITION (per weight) | | | | | | | |
|---|---|---|---|---|---|---|---|---|
| Sample | Active carbon; material or LiCoO₂ | Powder conducting material (carbon black) | Binders | | | | Thickness of electrode | Solvent (per weight) |
| | | | Polymer A1 | Polymer A2 | Teflon | PVDF | | |
| 1 | 20 | 0 | 0.8 | | 0.24 | | 350 | NMP (30) |
| 2 | 20 | 0 | 1 | | | | 75 | NMP (30) |
| 3 | 20 | 0 | | 1 | | | 50 | NMP (30) |
| 4 | 20 | 0 | | | 1 | | 75 | NMP (30) |
| 5 | 18 | 2 | 1 | | | | 350 | NMP (30) |
| 6 | 18 | 2 | | | 1 | | 350 | NMP (30) |
| | (LiCoO₂) | | | | | | | |
| 7 | 91 | 6 | | | | 3 | 85 | NEK(20) + NMP (10) |
| 8 | 91 | 9 | | 11 | | | 92 | NMP (20) |

Samples 1 through 6 represent electrodes useful for capacitors. The electrode material was made from phenol active carbon (made by Kansai Chemical Corp.) which was dry mixed with carbon black, i.e., the powdered conductive material, as the conductive material, utilizing a mixer. Samples 7 through 8 represent positive electrodes for batteries. Carbon black of the powdered conductive material as the electrode was added to LiCoO₂ of the powdered electrode active substance which served as the electrically-conductive material by dry type mixing performed utilizing a mixer. The binder was then added to all the samples 1 through 8 and mixing performed. A specified amount of solvent was further added and mixing was performed. After mixing, the material was coated onto the collector element with a doctor knife applicator. The samples were then dried by breezy/air heating or conventional hot air heating.

The samples 1 to 6 utilized active carbon material as the electrode material. Sample 7 utilized LiCoO₂ as the electrode material and PVDF (polyvinylidene fluoride) as the binder. Sample 8 utilized LiCoO₂ as the electrode material and polymer A2 as the binder, and was covered with ion-conducting polymer. Samples 1 through 4 contained no carbon black powdered electrically-conducting substance, and samples 5 through 11 contained carbon black though there were differences in the concentrations used in the samples. Polymer A1, polymer A2, Teflon powder, and PVDF were used as the binders. Polymer A1 and polymer A2 were ion-conducting polymers. The raw materials used to form polymers A1 and A2 are shown in Table 2 and Table 3, respectively. NMP (N methyl-2-pyrrolidone) was mainly used as the solvent, and MEK (methyl ethyl ketone) was used only in preparing sample 7.

**TABLE 2**

| Substance | Mixing ratio (weight parts) |
|---|---|
| Tri-functional (propylene glycol/ethylene glycol) random copolymer, SANNIX FA-103 (PO/EO=2/8, Mw=3,282, Sanyo Chemical Industries, Ltd.) | 8.36 |
| Difunctional 1, 4-butanediol | 0.34 |
| Ethylene cyanohydrin | 1.27 |
| Reaction catalyst NC-IM (Sankyo Air Products K.K.) | 0.03 |
| Total | 10 |

**TABLE 3**

| Substance | Mixing ratio (weight parts) |
|---|---|
| Cyanoethylated/dihydroxypropylated polyvinyl alcohol | 0.625 |
| Methoxypolyethyleneglycol methacrylate (mol. wt. 468) | 3.125 |
| Trimethylolpropanetrimethacrylate (mol. wt. 536) | 6.25 |
| Total | 10 |

With respect to breezy/air heating of this invention, the air heater 52, the ancillary dry air generator 58, and the solvent collector 57 are driven to generate dry air. The warm breeze is supplied into the cabinet 56 at 1 m/second (approximately minimum of 0.5-maximum 1.5 m/second) An area within the cabinet 56 wherein the warm breeze is flown through is divided into a first zone keeping the warm breeze approximately at 80 °C and a second zone keeping the warm breeze approximately at 100 °C. The sample material is supplied into the first zone then into the second zone at 3 m/minute. Length of the first and second zones each is approximately 4.5 m (total of 9 m), the time required for the air to flow though is approximately 3 minutes, and the mixed material is dried for 3 minutes. As such, the mixed material was dried so that migration of the binder and the powdered conducting material may be prevented.

A device as shown in FIG. 11 was utilized for the hot air heating, where outside air within a room is drawn from outside of the device. The hot air flow had a 60 % relative humidity and was directed at the sample at 15m/second for 3 minutes to dry the mixed material. The same procedure as in breezy/air heating was performed except for the wind velocity and drying of the hot air flow. For a reference purpose, the hot air flow of dried outside air as in this invention was also tested. That is, all the same steps in the above hot air flow heating are used except for the dry air instead of outside air (having 60 % relative humidity).

To measure the peeling strength, cellophane tape (KOKUYO TSS18N width 18 mm, thickness 50 µm) was attached to the electrode film fabricated on the surface of the current-collecting member, and the cellophane tape was then pulled away to make the electrode film stuck onto the cellophane tape separate from the current-collecting member. A peeling strength ranking could then be established according to the tape separate from the current-collecting member. A peeling strength ranking could then be established according to the amount of electrode film peeled from the surface of the current-collecting member.

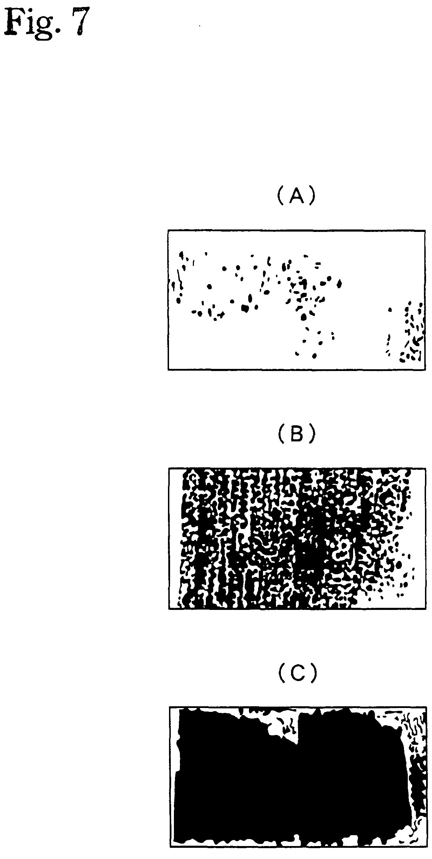

FIG. 7 taken from photographs shows the electrode film stuck to the cellophane tape. FIG. 7(A) taken from photographs shows a small flaked portion of the upper electrode film, which is ranked a. (The blacken portion in the photograph is the flaked portion of the electrode film.) FIG. 7(B) taken from photographs shows a small flaked portion of the middle electrode film, which is ranked b. (The blacken portion in the photograph is the flaked portion of the electrode film.)

FIG. 7(C) taken from photographs shows an electrode film completely peeled from the current-collecting member, which is ranked c. (The blacken portion in the photograph is the flaked portion of the electrode film.) For samples measurement, the results of peeling strength and impedance (Ω/ohm) are shown in Table 4.

**TABLE 4**

| Sample | Dry breezy/air heating | | Hot outside air heating | | Hot dry air heating | |
|---|---|---|---|---|---|---|
| | Peeling Strength | Impedance (Ω/ohm) | Peeling Strength | Impedance (Ω/ohm) | Peeling Strength | Impedance (Ω/ohm) |
| 1 | a | 2.5 | c | 96 | - | - |
| 2 | a | 0.7 | b | 36 | - | - |
| 3 | a | 0.9 | b | 8.6 | - | - |
| 4 | b | 0.5 | c | 1.8 | - | - |
| 5 | a | 0.3 | b | 1.11 | - | - |
| 6 | a | 0.7 | c | 1.35 | - | - |
| 7 | b | 2.3 | c | 6 | c | 5 |
| 8 | a | 0.5 | b | 3 | b | 3 |

To measure the impedance (Ω/ohm), the electrodes formed on the collector element were enclosed by copper plates of 2 centimeters in diameter and 5 millimeters thick. A pressure of 4.5 kilograms per centimeter was applied from above and below, and the resistance at 10 kilohertz AC was measured with an impedance analyzer.

On comparing dry breezy/air heated samples and outside hot air heated and dry hot air heated samples having the same sample numbers, in all cases, the peeling strength for the dry breezy/air heating samples was found to be one or two ranks higher than the hot air heated samples. In the impedance test results also, the breezy/air heated samples had an impedance (Ω/ohm) which was small, indicating low resistance. Further, comparing the outside hot air heating with dry hot air heating only as to the samples 7 and 8, there does not exist large differences regarding the peeling strength and impedance (Ω/ohm) between the two.

An electrode prepared according to the above-embodiment was used to prepare a battery, and Table 5 shows comparison results of dry breezy/air heating, outside hot air heating, and dry hot air heating. A lithium ion battery was prepared by combining the positive electrode using LiCoO₂ obtained through breezy/air heating and hot air heating (including outside air and dry air) of sample 7 as an active material and a negative electrode using graphite as an active material, which was used as test samples. Charging and discharging were performed using the test samples.

As this negative electrode, using a normal blade mixer, 9.5 weight part of powdered graphite with average particle size of 4 µm, i.e., powdery electrode active material, was mixed with 25.5 weight part of n-methylpyrrolidone having 0.5 weight part of dissolved polyvinylidene fluoride (PVDF) without ion conductive polymer, as the macromolecular binder.

After mixing about 8 hours, the mixed material was taken out and was placed on a copper foil of 20 µm in thickness and was cast using a doctor knife applicator with gap of 100 µm. Then, breezy/air drying with the dry air of this invention was conducted to vaporize n-methylpyrrolidone. The electrode thus obtained had a thickness of 80 µm. The battery had a separator between the positive electrode having an electrode film of 0.94 cm² on one surface and the negative electrode having an electrode film of 0.94 cm² on one surface in order to prepare a coincell. Electrolyte was filled up to prepare a test cell. EC/DEC(1/1)V/V solution dissolving 1.0 M of LiPF₆ was used as electrolyte.

The result of cycle degradation is shown in Table 5. The amount of charging and discharging at the first cycle (time) was assumed to be 100 and which will be compared with the amount at 200 cycles and 400 cycles. Conducting breezy/air heating accordingly was found to produce an electrode with less degradation as shown in Table 5. Further, comparing the outside air heating with dry hot air heating, the amount of charging and discharging at 200 cycles and 400 cycles regarding the dry hot air heating showed better results so far as the cycle degradation is concerned.

**TABLE 5**

| Condition of drying | Positive electrode No. | Discharging ratio at 200 cycles | Discharging ratio at 400 cycles |
|---|---|---|---|
| Breezy/air drying of dry air | 7 | 96 | 94 |
| Hot air drying of outside air | 7 | 86 | 80 |
| Hot air drying of dry air | 7 | 91 | 87 |

When air with relatively higher humidity is heated to prepare an electrode, electrode materials within the electrode sometime absorb moisture. Especially for a battery and an electrical double-layer capacitor used with high voltage (i.e., 1.5 V or more), a trace of moisture absorbed may cause electrolysis within the electrode to generate hydrogen and oxygen. As a result of the above

Also, with respect to a lithium type battery, LIPF₆ and LiBF₄ may be used as the ion conductive salt. Since these materials react with a trace of moisture and generate HF, HF generated corrodes a wide variety of materials to cause cycle degradation. Accordingly, zero temperature of air as dry air should be -10 °C or lower, preferably -20 °C or lower, more preferably -40 °C or lower and most preferably -50 °C or lower.

Here, the condition for charging should be such that charging is first conducted at a charging current of 0.21-0.26 mA/cm², secondly, maintaining a charging voltage of 4.2 V for two hours upon reaching 4.2 V, and thirdly, pausing the charging for ten minutes. The condition for discharging should be such that discharging is conducted at a discharging current of 0.21-0.26 mA/cm² up to 2.7 V of final voltage and pausing the discharging for ten minutes. Charging and discharging are repeated under room temperature.

The electrode material coated with ion-conducting polymer is described next.

In FIG. 1, the powdered electrode active substance 11 has the shape of particles consisting of bonded particles like LiCoO₂. The process for depositing the ion-conducting polymer 12 is also shown. Here, "adhere" or "adhesion" means that ions are attached in such manner that the ions can migrate between the ion conductive polymer 12 and the entire surface of the powdery electrode material. It means that the ion conductive polymer 12 adheres to the surface of the powdery electrode material 11 and covers it with the ion conductive polymer 12.

The finer the particles are, the more active the powdery electrode active material 11 is. When it is adhered to and covered by the ion conductive polymer 12, the activity is suppressed and can be turned a to more stable state. When the deposit of ion-conducting polymer 12 is thick, the electrical conduction decreases, and the current (charge) collection is poor.

Accordingly, forming a thin coating of ion-conducting polymer is preferable. Inventions relating to electrode structures coated with ion-conducting polymer have already been proposed by the applicants of this invention (Japanese Patent Application 11-262501, and Japanese Patent Application 11-262502).

The powder shape such as for the powdered electrode active substance 11 and powdered conducting material 14 is a fine particle substance. Further, such a powder is a collection of many substances. In certain cases, this fine particle substance refers to a state wherein a large number of substances in a fine particle state constitute an agglomeration.

The powdered electrode active substance uses ion insertable-separable materials and π-conjugated conductive macromolecular materials. For example, there are no particular restrictions on the electrode active substance used as the positive electrode for non-aqueous electrolyte batteries. However, in the case of chargeable batteries, chalcogen compounds allowing ion insertion/separation or composite chalcogen compounds containing lithium are recommended.

FeS₂, TiS₂, MoS₂, V₂O₅, V₆O₁₃, and MnO₂ may be employed as the above-chalcogen compounds. The chalcogen compound having lithium as described above includes LiCoO₂, LixNiyM₁-yO₂ (where M represents at least one type of metal element selected from transition metal or aluminum, or more preferably, it represents at least one type of metal element selected from Co, Mn, Ti, Cr, V, or Al, and 0.05 ≦ x ≦1.10 and 0.5 ≦ y ≦ 1.0), LiNiO₂, LiMnO₂, LiMn₂O₄, etc. Using oxide, salt or hydroxide of lithium, cobalt, nickel or manganese as starting materials, these starting materials are mixed in adequate composition, and the mixture is fired in the temperature range of 600 °C - 1000 °C under oxygen atmosphere.

There are no particular restrictions on the electrode active substance used as the negative electrode for non-aqueous electrolyte batteries. However, a material allowing lithium ion insertion/separation may be used, and lithium metal, lithium alloys (alloys such as lithium and aluminum, lead, indium) and carbon quality materials may be utilized.

Polyacetylene types, polyaniline types, polypyrrole types, polythiophene types, poly-ρ(para)-phenylene types, polycarbazole types, polyacene types and sulfur polymer types are among the useful π-conjugated conductive macromolecular materials.

Using lithium metals in the negative electrode achieves a large battery capacity particularly in primary non-aqueous electrolyte batteries.

Also, in non-aqueous electrolyte batteries, using carbon materials in the negative electrodes, that are capable of lithium ion insertion/separation yields a longer battery cycle life span. There are no particular restrictions on the carbon material used but materials such as pyrolytic carbon types, coke types (pitch coke, needle coke and petroleum coke, etc.) graphite types, glass carbon types, organic macromolecular compound fired products (carbonized pieces baked to a suitable temperature such as phenol resin and furan resin) carbon fibers and active carbon may be utilized.

The powdered electrically-conducting substance raises the conductivity of the electrode structure and though there are no particular restrictions, materials such as metal powder and carbon powder may be used. Particularly, preferred carbon powders are pyrolytic carbons such as carbon black, and their graphite products, artificial and natural scaly graphite powder, carbon fibers and their graphite products, etc. Product mixtures of these carbon powders are also utilized.

The ion conductive polymer is a polymer, which can dissolve at least an ion conductive salt such as lithium salt at concentration of 0.1 M (mol/l) or more shows an electrical conductivity of 10⁻⁸ S (Siemens)/cm or more at room temperature. Preferably, it is an ion conductive polymer, which dissolves at least ion conductive salt such as lithium salt and exhibits electrical conductivity of 10⁻² S/cm - 10⁻⁵ S/cm at room temperature.

The lithium salt is at least one type of lithium salt having ClO₄⁻, CF₃SO₃⁻, BF₄⁻, PF₆⁻, AsF₆⁻, SbF₆⁻, CF₃CO₂⁻ or (CF₃SO₂)₂N⁻ as anion.

The ion-conducting polymer raw material is a substance which produces the ion-conducting polymer by polymerizing, crosslinking, etc., when energy is supplied externally. Also, the raw material itself may be a polymer. The energy may be heat, ultraviolet light, light or electron radiation.

The method of manufacturing these electrode structures will now be described.

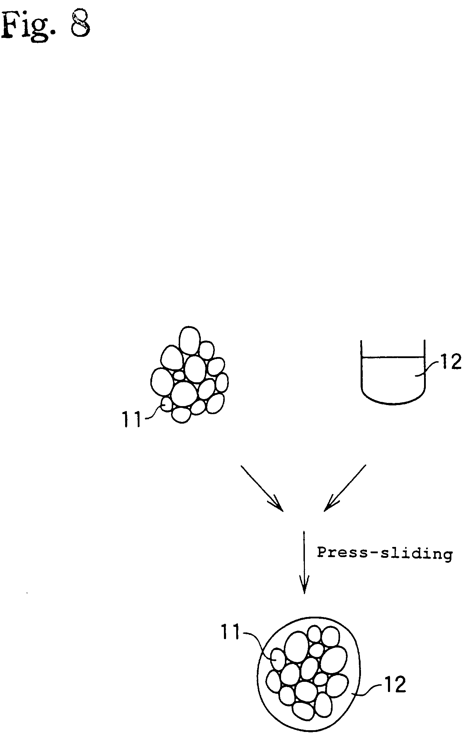

The method of coating the powdered conductive material with the ion-conducting polymer as is shown in Fig. 8 is to press-slide the ion-conducting polymer and the powdered electrode active substance against each other. In this process, by using only a minute amount of the ion-conducting polymer, the particle surfaces of the powdered electrode active substance are coated with the ion-conducting polymer, no voids are formed, and gaps in the powdered substance are reduced.

Press-sliding is the action of sliding while pressing mixtures 10 of the ion-conducting polymer 12 or the raw material of the ion-conducting polymer 12 and the powdered substance 11 together. An external force is applied to the mixtures so that they cohere to each other and the particles rotate, and this process is performed repeatedly to obtain a press-sliding product.

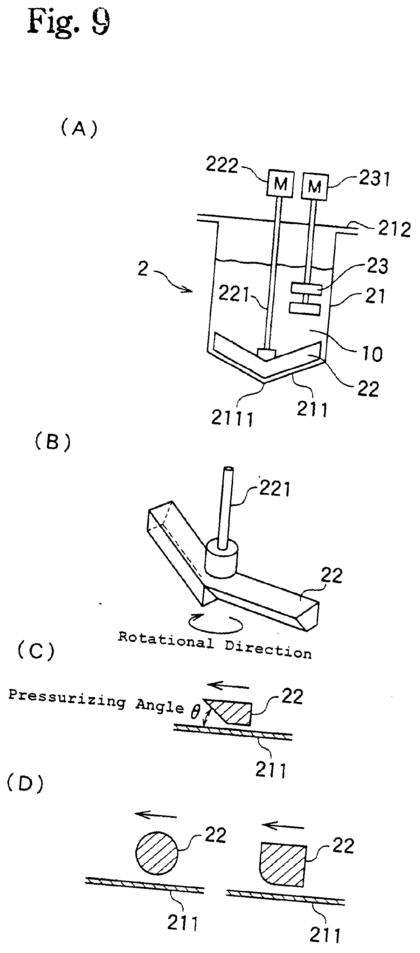

The press-sliding and kneading mixer is shown, for example, in Fig. 9(A). The mixture 10 of the ion conductive polymer 12 and the powdered material 11, or a mixture containing this mixture and a mixture 10 containing solvent, is placed in a container 21, and a main blade 22 is rotated. There is a gap between a bottom 211 of the container 21 and the main blade 22. When the main blade 22 is rotated, a part of the mixture 10 is moved between the bottom 211 of the container 21 and the main blade 22. It is subject to press-sliding and kneading. This process is repeated to coat the ion-conducting polymer 12 on the powdered substance 11. A press-sliding mixer 2 may if necessary be provided with a dispersion blade 23 in the container 21. The dispersion blade 23 is rotated at high speed via motor 231 to disperse the press-slide mixture 10.

The container 21 is provided for holding the mixture 10 which is press-slid and stirred. At the bottom of the container 21, there is provided a lower portion 2111 with a part of it at lower position. The bottom surface is inclined upward as it goes toward the peripheral portion of container 21. For instance, the bottom surface is lower at the center, and gradually goes up toward the periphery.

The bottom 211 is formed in the shape of a conical mortar. The inclination angle of the lower portion 2111 is set to 150 °C, for example. The bottom 211 of the container is wear-resistant, and can be formed by thermal spraying with tungsten or carbide using SUS. Plural bottom parts of this type may also be formed on the bottom surface 2111.

The main blade 22 functions together with the bottom surface 211 of the container 21, serving to press-slide and stir the mixture 10. The main blade 22, is positioned via shaft 221 to the desired location relative to the bottom 211 of the container 21 as shown for example in Figs. 9(A) and 9(B). The main blade 22 curves upwards corresponding to the slant of bottom 211 of the container 21. The main blade 22 may comprise two blades attached from the center part as shown in Fig. 9(B), or it may comprise a larger number of blades, e.g. 10 or more, depending on the amount and type of mixture.

The number of rotations of a main motor 222 driving the main shaft 221 is set low for example to 120 rpm or less, when press-sliding is performed.

The gap between the bottom surface 211 of the container 21 and the base surface of the main blade 22 is set as narrow as is necessary for press-sliding the mixture, for example 15 mm or less. This distance depends on the capacity of the press-sliding mixer 2 and on the shape of the main blade, etc.

The surface in the motion direction (press-sliding direction) of the main blade 22 is formed so that a pressing angle θ relative to the bottom surface of the container 21 is an acute angle. For example, if the cross-section of the main blade 22 is a reverse trapezoid as shown in Fig. 9(C), the pressing angle is from 3-70 degrees. The cross-section of the main blade 22 may also be circular or have a rounded corner as shown in Fig. 9(D). The material of the main blade has wear-resistant properties, and is formed for example by thermal spraying with tungsten or carbide using SUS.

The surface of the main blade 22 opposite to the advancing direction (direction of pressurizing and grinding) is designed in such manner that it runs almost perpendicularly to the bottom surface and at acute angle. As a result, when the main shaft 221 is rotated in reverse direction, the mixture 10 can be collected on the periphery of the main shaft 221.

If there are plural bottom parts on the bottom surface 211, the center parts of the main blade 22 are also disposed in positions of the bottom part corresponding to their number.

The dispersion blade 23 disperses the mixture 10 which is press-slid by the main blade 22. The dispersion blade 23 is disposed in a position at which the mixture 10 can be dispersed, and it rotates at a high speed such as 1000-4000 rpm. Due to this high speed rotation, the ion-conducting polymer 12 or its raw material coated on the particle surfaces of the powdered substance 11 uniformly disperses through the whole of the powdered substance.

This invention as described above, renders the following effects.

An electrode film that adheres well to the current-collecting member can be obtained.

An electrode film with low electrical resistance can be obtained.

A battery or double-layer capacitor with an electrode film having low electrical resistance and good bonding can be obtained.

It is readily apparent that the above-described invention has the advantages of wide commercial utility. It may be understood that the specific form of the invention hereinabove described is intended to be representative only, and certain modifications within the scope of these teachings will be apparent to those skilled in the art without departing from the spirit and scope of the invention.

Accordingly, reference should be made to the following claims in determining the full scope of the invention.

## Claims

1. A method of manufacturing an electrode structure (1) by coating a compound mixture (31) comprising an electrode material (11), a binder (17), and a solvent (19) onto a current-collecting member (13), directing a warm breeze (51) onto the compound mixture (31) coating to gradually vaporize the solvent (19, 32) and to form an electrode film (18) on the current-collecting member (13).

2. The method according to claim 1,
wherein the mixture (31) contains a material capable of conducting electricity (conductive material) (14).

3. A method of manufacturing a battery with electrode structures (1) used as electrodes of the battery, wherein a compound mixture (31) comprising an electrode active material (11), a conductive material (14), a binder (17), and a solvent (19) is coated onto a current-collecting member (13), and wherein a warm breeze (51) is directed onto the coating of the mixed material (31) to vaporize the solvent (19, 32) and to form an electrode film (18) on the current-collecting member (13) to constitute the electrode structures (1).

4. A method of manufacturing a battery with electrode structures (1) as battery electrodes,
wherein a compound mixture (31) comprising a powered electrode active substance (11) coated with an ion-conducting polymer (12), a powdered electrically-conducting substance (14), and a solvent (19) is coated onto a current-collecting member (13), and wherein a warm breeze (51) is directed onto the coating of mixed material (31) to vaporize the solvent (19, 32) and to form an electrode film (18) on the current-collecting member (13) to constitute the electrode structures (1).

5. A method of manufacturing an electrical double-layer capacitor with electrode structures (1) as electrodes, wherein a compound mixture (31) comprising a large surface area material (11), a binder (17) and a solvent (19) is coated onto a current-collecting member (13), and wherein a warm breeze (51) is directed onto the coating of mixed material (31) to vaporize the solvent (19, 32) and to form an electrode film (18) on the current-collecting member (13) to constitute the electrode structures (1).

6. A method of manufacturing a double-layer capacitor with electrode structures (1) as electrodes,
wherein a compound mixture (31) comprising a large surface area material (11) coated with an ion-conducting polymer (12), a powdered electrically-conducting substance (14), and a solvent (19) is coated onto a current-collecting member (13), and wherein a warm breeze (51) is directed onto the coating of the mixed material (31) to vaporize the solvent (19, 32) and to form an electrode film (18) on the current-collecting member (13) to constitute the electrode structures (1).

7. The method according to any of claims 1 to 6,
wherein a warm breeze (51) in a temperature range of about 60 °C to 150 °C is used and is directed onto the compound mixture (31) at a speed of about 0.1 to 3 m/s.

8. The method according to any of claims 1 to 7,
wherein a dry breeze (58, 52, 53, 51) is used as the warm breeze (51) which is directed onto the compound mixture (31).
